# EUROPÄISCHE PATENTSCHRIFT

(11) **EP 2 150 689 B1**
(45) Veröffentlichungstag und Bekanntmachung des Hinweises auf die Patenterteilung: **01.08.2012**
(21) Anmeldenummer: 08759750.6
(22) Anmeldetag: 19.05.2008
(51) Int. Cl.: F01N 3/20

(54) **ELEKTRISCH BEHEIZBARE WABENKÖRPER-ANORDNUNG MIT STÜTZSTIFTEN**
ELECTRICALLY HEATABLE HONEYCOMB ARRANGEMENT HAVING SUPPORT PINS
ENSEMBLE DE CORPS EN NID D'ABEILLES À TIGES DE SOUTIEN, POUVANT ÊTRE CHAUFFÉ ÉLECTRIQUEMENT

(30) Priorität: 31.05.2007 DE 102007025417
(43) Veröffentlichungstag der Anmeldung: 10.02.2010
(73) Patentinhaber: Emitec Gesellschaft für Emissionstechnologie mbH, 53797 Lohmar (DE)
(72) Erfinder: KONIECZNY, Jörg-Roman, 53804 Much (DE); BRÜCK, Rolf, 51429 Bergisch Gladbach (DE); HODGSON, Jan, 53840 Troisdorf (DE)
(74) Vertreter: Rössler, Matthias
(86) Internationale Anmeldenummer: PCT/EP2008/056126
(87) Internationale Veröffentlichungsnummer: WO 2008/145556

(56) Entgegenhaltungen:
- DE-A1- 4 434 673
- DE-A1- 10 051 562
- DE-U1- 9 317 050
- US-A- 5 525 309

## Beschreibung

Die vorliegende Erfindung betrifft eine Anordnung von einem ersten Wabenkörper und einem zweiten Wabenkörper, wobei der erste Wabenkörper wenigstens einen gewundenen oder gewickelten Stapel aufweist, gebildet aus wenigstens teilweise strukturierten Blechfolien mit einer Vielzahl von durchströmbaren Kanälen, und wobei der erste Wabenkörper Stützstifte aufweist, die zur Verbindung mit einem stromabwärts gelegenen zweiten Wabenkörper vorgesehen sind. Weiterhin betrifft die Erfindung ein Verfahren zum Einbringen von Stützstiften in einen Wabenkörper sowie eine geeignete Vorrichtung zur Durchführung eines solchen Verfahrens.

Durch die WO 92/13636 A1 ist eine Wabenkörperanordnung mit mehreren, gegeneinander abgestützten, Scheiben bekannt. Die Wabenkörperanordnung weist dabei wenigstens zwei Scheiben auf, die voneinander beabstandet sind und nacheinander von einem Abgas durchströmt werden. Zur Verbindung der Scheiben untereinander sind nahe einer Achse Stützstifte angeordnet.

Des Weiteren zeigt die WO 96/10127 A1 einen elektrisch beheizten Wabenkörper, der sowohl über Stützstifte als auch über, am Mantel des Wabenkörpers angeordnete Stützelemente an einem zweiten stromabwärts gelagerten Wabenkörper abgestützt wird.

Der generelle Einsatz von Stützelementen zur Abstützung eines Wabenkörpers wurde bereits in der US 5,525,309, der DE 100 51 562 A1 und der DE 44 34 673 A1 erwähnt, wobei keines dieser Dokumente konkrete Hinweise zu räumlichen Anordnung der Stützelemente angibt.

Die DE 93 17 050 U1 offenbart eine zwei Wabenkörper aufweisende Vorrichtung, wobei die Wabenkörper durch eine Mehrzahl von Stützelementen mechanisch miteinander verbunden sind und einer der beiden Wabenkörper beheizbar ist. Die DE 93 17 050 U1 lehrt insbesondere, die Stützelemente mit einer solchen Anzahl vorzusehen, dass eine wirksame Unterdrückung von Schwingungen eintritt, um die Belastung der Stützelemente gering zu halten.

Die modernen Einsatzgebiete für beheizte Wabenkörper in Abgasreinigungssystemen in Kraftfahrzeugen haben sich nun dahingehend verändert, dass insbesondere Wabenkörper mit größeren Querschnitten bei gleichzeitig immer dünneren Wänden eingesetzt werden. Infolge einer Vergrößerung des durchströmten Querschnittes der beheizten Katalysator-Trägerkörper werden die dünnen Wände anfälliger gegenüber der hohen thermischen und dynamischen Beanspruchung durch den Abgasstrom.

Zur thermischen Isolierung des elektrisch beheizten Wabenkörpers gegenüber dem Abgassystem und zur Abstützung und Stabilisierung der dünnen Kanalwände des beheizten Wabenkörpers sollten insbesondere für größere Wabenkörper auch eine größere Anzahl von Stützstifte eingesetzt werden. Der Einsatz von mehr Stützstiften führt jedoch zu einer Reduzierung der Anzahl der durchströmbaren Kanäle des Wabenkörpers und gleichzeitig zu einer Erhöhung der Wahrscheinlichkeit der Beschädigung der Kanäle bzw. Wände der Wabenkörper. Die Kanäle oder Wände können insbesondere bei der Fertigung bzw. bei dem Zusammenbau von Wabenkörpern mit den Stützstiften beschädigt werden. Gleichzeitig führt die Erhöhung der Anzahl von Stützstiften zu einer Erhöhung des Gewichts und ist gleichzeitig ein bedeutender Kostenfaktor einerseits in der Fertigung aber auch in der Materialbereitstellung für diese Abgaskomponenten.

Aufgabe der Erfindung ist es daher, die mit Bezug auf den Stand der Technik geschilderten Probleme zumindest teilweise zu lösen und insbesondere eine Anordnung mit einem beheizten Wabenkörper bereitzustellen, der auch bei großem Durchmesser mit einer geringen Anzahl von Stützstiften eine hohe Stabilität der Struktur und hohe Effektivität hinsichtlich der Abgasreinigung erreichen kann. Gleichzeitig soll der Wabenkörper leicht sein und günstig in der Herstellung. Darüber hinaus soll auch ein Verfahren und eine Vorrichtung zum Einbringen derartiger Stützstifte über eine Stirnseite des Wabenkörpers vorgeschlagen werden, die einfach und schonend die Stützstifte an den gewünschten Positionen anordnet.

Diese Aufgaben werden gelöst durch eine Anordnung gemäß den Merkmalen des Patentanspruchs 1, einem Verfahren zum Einbringen von Stützstiften in einen Wabenkörper gemäß den Merkmalen des Patentanspruchs 9 bzw. einer Vorrichtung gemäß den Merkmalen des Patentanspruchs 11. Weitere vorteilhafte Ausgestaltungen der Erfindung sind in den jeweils abhängig formulierten Patentansprüchen angegeben. Es ist darauf hinzuweisen, dass die in den Unteransprüchen einzeln aufgeführten Merkmale, in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Vorliegend wird die Aufgabe gelöst durch eine Anordnung, aufweisend einen ersten Wabenkörper, der mit wenigstens einem gewundenen oder gewickelten Stapel gebildet ist und eine Vielzahl von durchströmbaren Kanälen aufweist, wobei ein erstes Ende des Stapels mit einem elektrischen Anschluss und ein zweites Ende mit einer elektrischen Masse verbunden ist, und der Stapel eine Mehrzahl von miteinander in elektrischem Kontakt stehenden, wenigstens teilweise strukturierten, Blechfolien aufweist, und der Wabenkörper Stützstifte zur Verbindung mit einem zweiten Wabenkörper aufweist, die wenigstens außerhalb eines inneren Bereiches einen Abstand voneinander entlang des Verlaufs des Stapels von wenigstens 25 mm aufweisen.

Anstelle des zweiten Wabenkörpers kann natürlich auch ein anderer Trägerkörper über Stützstifte mit dem ersten Wabenkörper verbunden werden.

Bezüglich der möglichen unterschiedlichen Ausgestaltungen der elektrischen Anschlüsse des Wabenkörpers kann insbesondere auf die eingangs genannten Dokumente der Anmelderin verwiesen werden.

Bevorzugt beträgt der Abstand der Stützstifte voneinander entlang des Verlaufs des Stapels wenigstens außerhalb des inneren Bereichs wenigstens 30 mm oder sogar wenigstens 35 mm. Dabei ist mit Abstand entlang des Verlaufs des Stapels gemeint, dass nur die Abstände von Stützstiften betrachtet werden, die innerhalb eines Stapels benachbart zueinander angeordnet sind. Der Verlauf des Stapels orientiert sich demnach am Verlauf der Blechfolien. Damit ist zunächst nicht die Beabstandung von Stützstiften gemeint, die im Falle einer Wicklung eines Stapels zwar nebeneinander angeordnet sein können, bei denen aber zur Bestimmung der Beabstandung wenigstens eine Stapelgrenze überschritten wird.

Belastungstests haben veranschaulicht, dass gerade der Abstand entlang des Stapelverlaufs bzw. des Blechfolienverlaufes wesentlich für die stabile Fixierung des Wabenkörpers ist. Damit kann insbesondere eine zur räumlichen Anordnung des Stapels geeignete Verteilung der Stützstifte unter Berücksichtigung der Windungsweise bzw. Wickelweise des Wabenkörpers erreicht werden, die auch bei Einsatz in einem mobilen Abgassystem in motornaher Anordnung dauerhaft standhält. Der überraschend große Abstand kann je nach Wickeltyp jedoch im zentralen inneren Bereich ggf. nicht ausreichend sein, so dass gerade hier eventuell eine geringe Anzahl von Stützstiften entlang des Verlaufs enger zueinander angeordnet sein - dies gilt insbesondere für Wendungen bzw. Krümmungen, die nahezu nach Art einer Faltung gebildet sind. Die hier angegebenen Abstände sind insbesondere für Blechfolien geeignet, die wenigstens einen der folgenden Parameter erfüllen: geschlitzte bzw. perforierte Blechfolien, Blechfolien mit einer Dicke kleiner 80 Mikrometer oder sogar kleiner 60 Mikrometer, Blechfolien einer Länge größer 500 mm oder sogar 1000 mm, Blechfolien mit einer Breite kleiner 40 mm oder sogar 20 mm.

Es hat sich gezeigt, dass der größere Abstand der Stützstifte voneinander nicht zu kritischen Resonanzfrequenzen des Wabenkörpers führt, so dass von dieser Seite keine bisher erwartete Gefahr ausgeht. Weiterhin wird durch den größeren Abstand der Stützstifte eine gewisse Vibration bewusst in Kauf genommen. Diese Vibration kann zu einer Abscheidung von Rußpartikel innerhalb des Wabenkörpers und/oder des stromabwärts angeordneten zweiten Trägerkörpers führen, die dann z.B. durch nachgelagerte Partikelfilter aus dem Abgasstrom entfernt werden können. Dadurch wird eine höhere Effizienz in der Abgasreinigung als auch eine höhere Lebenserwartung der Wabenkörper ermöglicht.

Gemäß einer weiteren Ausgestaltung der Anordnung wird vorgeschlagen, dass wenigstens die Stützstifte außerhalb des inneren Bereichs über die Querschnittsfläche des Wabenkörpers so verteilt sind, dass diese eine Distanz von wenigstens 25 mm zueinander aufweisen. Bevorzug sollte diese Distanz sogar wenigstens 30 mm und in besonders vorteilhafter Weise wenigstens 35 mm betragen. Bei dieser "Distanz" ist in Abgrenzung zum bereits beschriebenen "Abstand" der Stützstifte voneinander eine Überschreitung von Stapelbegrenzungen zusätzlich erfasst. Die "Distanz" kommt somit beispielsweise auch innerhalb eines (z.B. sehr hohen) Stapels zum Einsatz. Außerdem kann so beispielsweise auch die Position eines Stützstiftes im Hinblick auf die Höhe des Stapels angepasst werden, wenn das Kriterium des "Abstandes" entlang des Stapelverlaufs erfüllt ist. Dies gilt insbesondere für den Fall, dass eine ausreichende Stabilität des ersten Wabenkörpers zwischen benachbarten Stützstiften vorliegt, die ggf. mit wenigstens einer lokalen "internen" (also nur auf den ersten Wabenkörper wirkenden) Halterung erreicht ist.

Gemäß einer weiteren Ausgestaltung der Anordnung beträgt ein Durchmesser des ersten Wabenkörpers wenigstens 100 mm. In einer bevorzugten Form beträgt der Durchmesser wenigstens 150 mm und in einer besonders bevorzugten Form wenigstens 200 mm. Der Durchmesser des zweiten Wabenkörpers bzw. Trägerkörpers ist bevorzugt mindesten so groß wie der des ersten Wabenkörpers.

Gemäß einer Weiterbildung der Anordnung wird vorgeschlagen, dass wenigstens ein Stützstift so dimensioniert ist, dass dieser den Kanal, in dem dieser positioniert ist, so ausfüllt, dass der Stützstift über wenigstens 50 % eines, in dem Wabenkörper befindlichen, Umfangs in Kontakt mit den umgebenden Wänden steht, die den Kanal bilden. Dabei kann der Kanal durch mindestens eine Blechfolie, eine Blechfolie und einem Gehäuseabschnitt, einer Blechfolie und einer Isolierung, etc. gebildet sein. Weiterhin kann der Stützstift auch innerhalb von Schlitzen positioniert sein, die mit anderen, auch isolierenden Strukturen des Wabenkörpers gebildet sind. Die Umschließung der Stützstiftes von der Kanalwand sorgt für einen ausreichenden Halt während der Fertigung und später im Einsatz. Dabei kann der Querschnitt des Stützstiftes ggf. etwas größer sein als der mittlere Kanalquerschnitt, allerdings sollte dies 10% oder sogar nur 5% nicht überschreiten. Insbesondere ist der wenigstens eine Stützstift über wenigstens 75 % seines im Wabenkörper befindlichen Umfangs in Kontakt mit den umgebenden Wänden oder sogar zu wenigstens 95 % seines Umfangs in Kontakt mit den umgebenden Wänden.

Besonders vorteilhaft ist es, wenn die Stützstifte bis zu einer Tiefe von höchstens 8 mm in den zweiten Wabenkörper eingreifen. Bevorzugt ist es, wenn die Stützstifte sich bis zu einer Tiefe von höchstens 5 mm und besonders bevorzugt bis zu einer Tiefe von höchstens 3 mm in den zweiten Wabenkörper hinein erstrecken. Dabei soll insbesondere vermieden werden, dass Sekundärstrukturen innerhalb der Kanäle des zweiten Wabenkörpers durch das Einschieben der Stützstifte zerstört werden. Sekundärstrukturen sind z.B. Löcher, Schlitze, Laschen, transversale Mikrostrukturen oder auch Strömungsumlenkungen, die beispielsweise eine verbesserte Vermischung des Abgasstroms erreichen sollen und in Ergänzung bzw. Überlagerung zu den aus dem allgemein bekannten Stand der Technik geläufigen wellenförmigen Strukturen der Blechfolien eingesetzt werden.

Gemäß einer besonders bevorzugten Weiterbildung der Anordnung weist wenigstens ein Stützstift wenigstens eine Spitze auf, die außermittig zu einer Mittelachse des Stützstiftes angeordnet ist. Ferner ist es besonders vorteilhaft, wenn wenigstens ein Stützstift wenigstens eine Spitze aufweist, die fluchtend mit der Mantelfläche des Stützstiftes angeordnet ist.

Gemäß einer weiteren Ausgestaltung weist der wenigstens eine Stapel des ersten Wabenkörpers eine Höhe von wenigstens 10 mm auf. Bevorzugt weist der Stapel eine Höhe von wenigstens 20 mm und besonders bevorzugt von wenigstens 30 mm auf. Die vorstehende Anweisung zur Ausführung der Abstände und Distanzen der Stützstifte kann hierbei mir größerer Variationsvielfalt eingehalten werden, so dass gerade zum Beispiel besonders wenige Stützstifte eingesetzt werden können, was (gerade bei sehr großen Wabenkörpern) zu einem beachtlichen Kostenvorteil führen kann. Die Höhe eines Stapels ist bei Betrachtung der Querschnittsfläche eines Wabenkörpers erkennbar und betrifft die Stapelhöhe der gemeinsam miteinander gewundenen Blechfolien bzw. die voneinander elektrisch isolierten Stapel. Gemäß einer vorteilhaften Ausgestaltung umfasst der innere Bereich des ersten Wabenkörpers höchstens 20 % einer Querschnittsfläche des ersten Wabenkörpers. Gemäß einer besonders vorteilhaften Ausgestaltung nimmt der innere Bereich höchstens 10 % der Querschnittsfläche ein. Die Querschnittsfläche kann bei Wabenkörpern, die keine zylindrische Form aufweisen, sondern z.B. konisch ausgeführt sind, als die größte Querschnittsfläche angenommen werden, da die größere Querschnittsfläche üblicherweise dem zweiten Wabenkörper zugewandt ist. Wie bereits ausgeführt, orientiert sich die Größe den inneren Bereiches am der Wickelart der Stapel. Da hierfür ein Wickeltyp gewählt wird, der im Wesentlichen die gewünschte Querschnittsfläche ausfüllt, hat der innere Bereich bevorzugt eine Form (rund, eckig, elliptisch,...), die im Wesentlichen der (äußeren) Form (und Aufrichtung) der Querschnittsfläche entspricht.

Vor dem Hintergrund einer automatisierten Fertigung eines beheizbaren Wabenkörpers bzw. einer Anordnung eines beheizbaren ersten Wabenkörpers mit einem zweiten Wabenkörper oder einem Trägerkörper wird erfindungsgemäß auch ein Verfahren zum Einbringen von Stützstiften in Kanäle oder Schlitze eines ersten Wabenkörpers vorgeschlagen, wobei Stützstifte durch eine Haltevorrichtung positioniert werden und mittels Anregung quer zur Zuführbewegung des ersten Wabenkörpers und der Haltevorrichtung zueinander, die Stützstifte zum Eingreifen in die Kanäle oder Schlitze gebracht werden. Schlitze sind hierbei z.B. die Bereiche zur Isolierung von Blechstapeln voneinander. Unter einer "Queranregung" wird insbesondere eine Art Vibrationsbewegung verstanden, die beispielsweise senkrecht zur Zuführbewegung orientiert sein kann. Die Queranregung wird bevorzugt mit einer konstanten Frequenz und Amplitude durchgeführt, dies ist aber nicht zwingend erforderlich. Die Zuführbewegung orientiert sich insbesondere an der Lage der Kanäle des zweiten Wabenkörpers und ist bevorzugt parallel dazu. Gemäß einer Weiterbildung des Verfahrens werden die Stützstifte danach gemeinsam mit dem ersten Wabenkörper an einem zweitem Wabenkörper angeordnet, so dass ein Spalt die beiden Wabenkörper beabstandet, und die Stützstifte durch einen Lötprozess an den Wabenkörpern fixiert. Der Spalt beträgt bevorzugt nur wenige Millimeter, z.B. 5 bis 10 mm. Der Lötprozess umfasst bevorzugt ein Hochtemperatur-Vakuum-Hartlötverfahren.

Dieses Verfahren kann insbesondere in eine Fertigung auch von erfindungsgemäßen Anordnungen oder von Wabenkörpern integriert werden, die nachfolgend beschrieben werden soll.

Dazu werden Stützstifte vereinzelt, um von einem Manipulator einzeln oder als Gruppe aufgenommen werden zu können, wobei diese dann einer Haltevorrichtung bzw. Anordnungsmatrix zugeführt werden und insbesondere über ein Messsystem in dieser Haltevorrichtung bzw. Anordnungsmatrix eingeführt und damit positioniert werden. Diese Haltevorrichtung weist insbesondere eine oder mehrere genau vorgegebene Positionierungsmöglichkeit auf, in der die Stützstifte aufgenommen und geklemmt werden können. Weiterhin wird der Wabenkörper vor dieser Haltevorrichtung positioniert, wobei auf der der Haltevorrichtung abgewandten Seite eine Prallplatte an dem Wabenkörper angeordnet wird über den der Wabenkörper fixiert oder auch aufgenommen und transportiert werden kann.

Die Anregung quer (schräg bzw. sogar im Wesentlichen senkrecht) zur Zuführbewegung des Wabenkörpers zu der Haltevorrichtung kann nunmehr über eine anregbare Prallplatte erzeugt werden oder über eine anregbare Haltevorrichtung für die Stützstifte. Bevorzugt ist hier jedoch die Prallplatte anregbar, auf der der Wabenkörper fixiert ist, da somit auch für die weiteren Fertigungsschritte, insbesondere für das Zusammenführen von erstem Wabenkörper und zweitem Wabenkörper, die Prallplatte Teil der Vorrichtung bleibt. Die Anregung der Stützstifte, quer zur eigentlichen Zuführbewegung des Wabenkörpers und der Haltevorrichtung zueinander, führt dazu, dass eine Kollision der Stützstiftspitzen mit den Blechfolien des Wabenkörpers durch Vibration, Oszillation oder ähnliche erzeugte Querbewegungen vermieden bzw. wieder gelöst wird, so dass ein problemloses Einschieben in die Struktur des Wabenkörpers ermöglicht wird und somit die Kanalwände des Wabenkörpers unbeschädigt bleiben.

Die Haltevorrichtung und der Wabenkörper werden gegebenenfalls soweit zueinander bewegt, bis die Stützstifte auf der Prallplatte auftreffen, so dass eine komplette Durchdringung des ersten Wabenkörpers und damit eine maximale Fixierung der Stützstifte erreicht wird. Nun kann die Haltevorrichtung von den Stützstiften entfernt und eine weiterer Trägerkörper bzw. ein zweiter Wabenkörper vor dem ersten Wabenkörper positioniert werden. Auch hier kann eine Anregung entweder des zweiten Wabenkörpers oder des ersten Wabenkörpers infolge der Prallplatte erfolgen, so dass die Stützstifte in den zweiten Wabenkörper bzw. in den Trägerkörper bis zu einer vorbestimmten Tiefe eingeführt werden können.

Durch die hier beschriebene Anregung zur verbesserten Einführung der Stützstifte in die sehr filigrane Struktur der Wabenkörper, kann auf eine aufwändige und kostenintensive manuelle Montage der Stützstifte in dem Wabenkörper verzichtet werden und insbesondere eine automatisierte Fertigung dieser Abgasreinigungsanordnung ermöglicht werden.

Die Stützstifte können im Folgenden oder auch nach dem Fixieren im ersten Wabenkörper infolge eines Lötprozesses in den Kanälen der Wabenkörper bzw. in dem Trägerkörper fixiert werden.

Die erfindungsgemäße Vorrichtung, auf die sich die Erfindung ferner erstreckt, ist zur Aufnahme eines ersten Wabenkörpers oder zum Positionieren von Stützstiften, wobei die Vorrichtung so anregbar ist, dass die Vorrichtung im Wesentlichen quer zur Erstreckungsrichtung der Kanäle oder Schlitze des ersten Wabenkörpers oder zu einer Mittelachse der Stützstifte bewegbar ist.

Die erfindungsgemäße Vorrichtung kann also entweder den ersten Wabenkörper, die Haltevorrichtung für die Stützstifte oder den zweiten Wabenkörper aufnehmen und anregen.

Auch Wabenkörper, die keine koaxiale Erstreckung von Kanälen aufweisen, sondern konisch gewickelt sind oder auch gewundene durchströmbare Kanäle aufweisen, können durch eine solche Vorrichtung oder durch solch ein Verfahren hergestellt werden. Die Anregung dieser Montagevorrichtungen dient insbesondere nur dem ersten Einschieben der Stützstifte in vorhandene Kanalöffnungen. Natürlich müssen dementsprechend entweder die Stützstifte oder die Haltevorrichtungen der Stützstifte so ausgeführt sein, dass ein Aufeinanderschieben eines Wabenkörpers oder eines weiteren Trägerkörpers möglich ist.

Die Erfindung sowie das technische Umfeld werden nachfolgend anhand der Figuren näher erläutert. Es ist darauf hinzuweisen, dass die Figuren besonders bevorzugte Ausführungsformen der Erfindung zeigen, auf die sie jedoch nicht beschränkt ist. Es zeigt darin schematisch:
- Fig. 1:: den Querschnitt eines elektrisch beheizbaren Wabenkörpers nach einem ersten Ausführungsbeispiel der Erfindung,
- Fig. 2:: die Anordnung eines beheizbaren Wabenkörpers vor einem stromabwärts gelagerten Trägerkörper in einer Seitenansicht nach einem weiteren Ausführungsbeispiel der Erfindung;
- Fig. 3:: die Anordnung als Teil einer Abgasreinigungsvorrichtung,

- Fig. 4:: die Ansicht eines Stützstiftes,
- Fig. 5:: die Seitenansicht einer weiteren Ausführungsvariante der erfindungsgemäßen Anordnung,
- Fig. 6:: die Ansicht eines Stützstiftes in einem Kanal, und
- Fig. 7:: die Veranschaulichung eines Herstellungsverfahrens für einen Wabenkörper mit Stützstiften.

Die vorliegende Erfindung ist nicht auf die dargestellten Ausführüngsbeispiele beschränkt. Es sind vielmehr zahlreiche Abwandlungen der Erfindung im Rahmen der Patentansprüche möglich. So können beispielsweise anstelle der gezeigten zylindrischen Wabenkörper auch konisch geformte Wabenkörper eingesetzt werden. Weiterhin ist die Erfindung nicht auf sich geradlinig erstreckende Kanäle beschränkt sondern auch für gewundene oder schräg zur Längsachse verlaufende Kanäle geeignet. Ebenfalls müssen die Wabenkörper nicht aus gewundenen Stapeln gebildet sein sondern können auch aus einem gewickelten Stapel erzeugt worden sein.

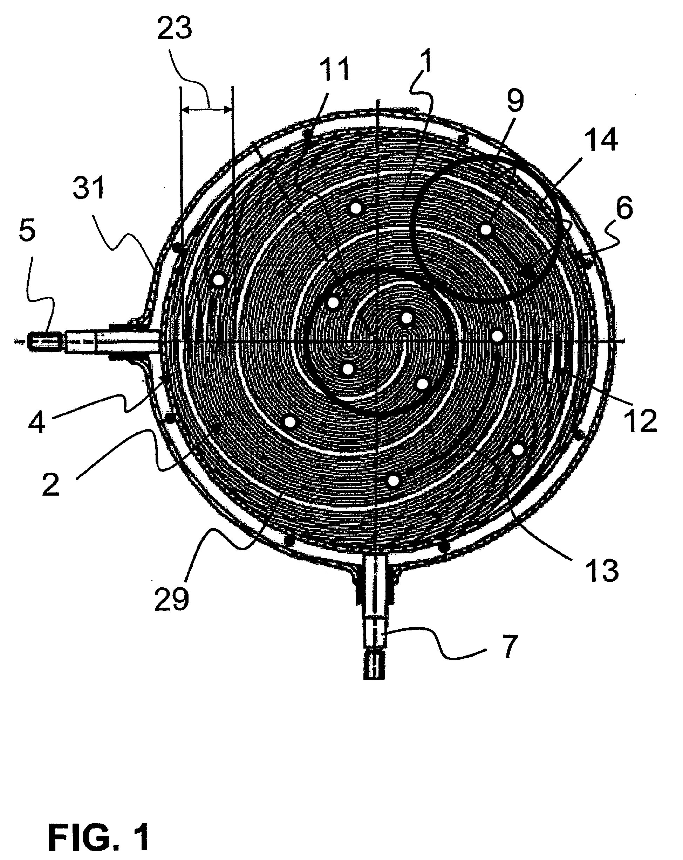

Fig. 1 zeigt schematisch den Querschnitt eines Wabenkörpers 1 in einem Gehäuse 31, der aus einem Stapel 2 gebildet ist und Kanäle 3 aufweist, die durch teilweise strukturierte Blechfolien 8 gebildet sind, und in denen Stützstifte 9 angeordnet sind. Schlitze 29 dienen der Isolierung der Stapelwindungen voneinander. Weiterhin verfügt der Wabenkörper 1 über eine Querschnittsfläche 12 und einen elektrischen Anschluss 5 an einem ersten Ende 4 des Stapels 2 und an einem zweiten Ende 6 eine elektrische Masse 7 zur Erzeugung eines Stromflusses durch den Wabenkörper 1 infolgedessen sich dieser erhitzt. Weiterhin weist der Stapel 2 eine Höhe 23 auf und der Wabenkörper 1 einen inneren Bereich 11. Der Abstand 13 verdeutlicht den Unterschied in der Beabstandung von Stützstiften entlang des Verlaufs eines Stapels 2 außerhalb des inneren Bereiches 11 gegenüber der Distanz 14 (Umfeld) von Stützstiften, die über den Querschnitt 12 außerhalb des inneren Bereiches 11 verteilt sind.

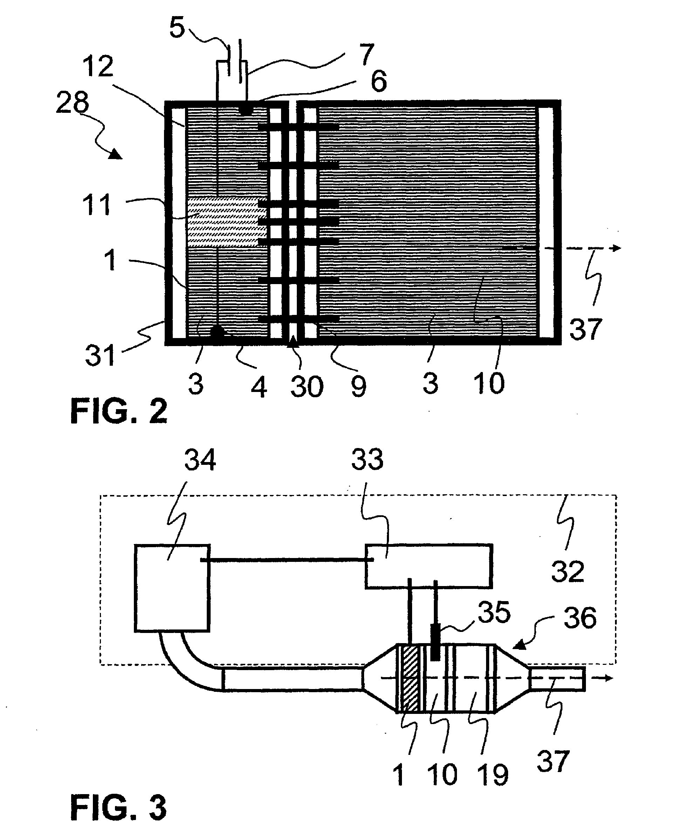

Fig. 2 zeigt schematisch in einer Seitenansicht die Anordnung 28 des ersten Wabenkörpers 1 mit einem zweiten Wabenkörper 10 innerhalb eines Gehäuses 31. Dabei ist der Wabenkörper 1, mit einer Querschnittsfläche 12 mit einem inneren Bereich 11 über Stützstifte 9 in dem zweiten Wabenkörper 10 bzw. dem weiteren Trägerkörper so abgestützt, dass zwischen den beiden Wabenkörpern 1, 10 ein Spalt 30 erhalten bleibt. Der erste Wabenkörper 1 wird über einen elektrischen Anschluss 5 an einem ersten Ende 4 eines Stapels 2 und über eine elektrische Masse 7 an einem zweiten Ende 6 eines Stapels 2 kontaktiert. Der Abgasstrom durchströmt in Strömungsrichtung 37 zuerst die Kanäle 3 des ersten Wabenkörpers 1, wird bei Bedarf durch diesen erhitzt und strömt dann durch den stromabwärts angeordneten zweiten Wabenkörper 10 bzw. durch den weiteren Trägerkörper.

Fig. 3 zeigt schematisch die erfindungsgemäße Anordnung 28 als Teil eines Abgassystems 36 eines Kraftfahrzeugs 32. Eine Abgasstrom strömt von einer Verbrennungskraftmaschine 34 durch die Anordnung 28, bestehend aus (bevorzugt zumindest teilweise katalytisch beschichteten) Wabenkörpern 1 und 10, und über eine weitere Abgasreinigungskomponente 19, z.B. einem Partikelfilter, in Strömungsrichtung 37 in die Umgebung. Das Abgassystem 36 kann dabei über einen Sensor 35 verfügen, der gemeinsam mit dem beheizbaren ersten Wabenkörper 1 mit einer Kontrolleinheit 33 verbunden ist, die, abhängig von Motorkennwerten und Sensordaten, die Beheizung des ersten Wabenkörpers 1 steuert.

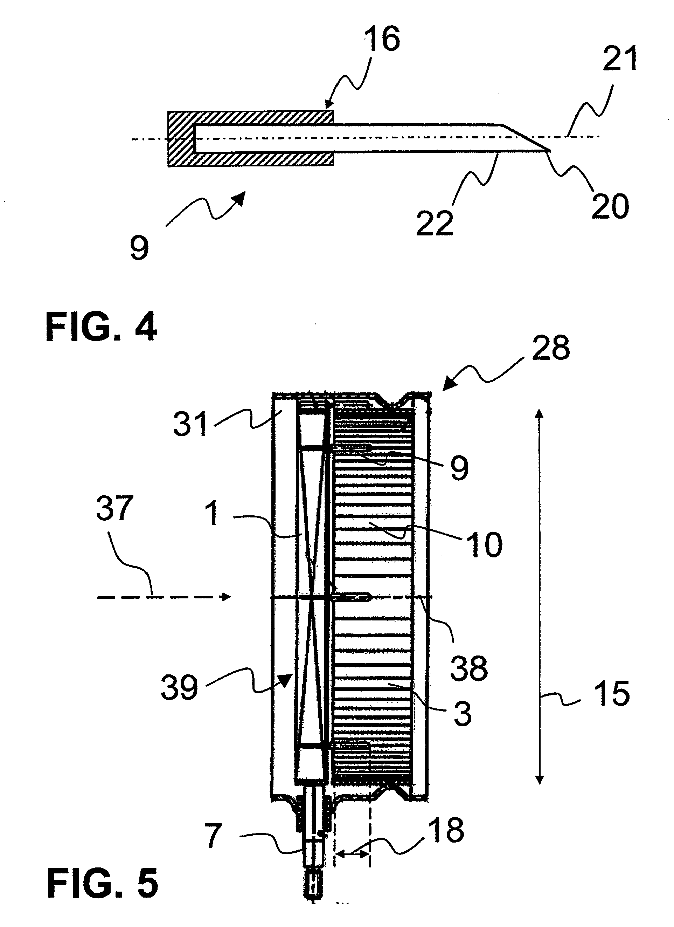

Fig. 4 zeigt in einer Seitenansicht den Stützstift 9, der eine Mittelachse 21 und wenigstens eine Spitze 20 aufweist, wobei diese Spitze 20 einerseits mittig zum Umfang 16 des Stützstiftes 9 angeordnet sein kann als auch außermittig und insbesondere fluchtend mit der Mantelfläche 22 des Stützstiftes 9. Durch die Spitze 20 wird insbesondere das Einschieben bzw. Positionieren des Stützstiftes 9 in den Kanal 3 der Wabenkörper ermöglicht, wobei eine Beschädigung der Kanäle 3 bzw. der Kanalwände 17 durch einen frontal auftreffenden Stützstift 9 während der Montage verhindert werden soll. Im gegenüberliegenden Abschnitt der Spitze ist zudem eine elektrische Isolierung (schraffiert gezeichnet) veranschaulicht, die den größten Umfang 16 des Stützstiftes 9 definiert, der insbesondere mit dem ersten Wabenkörper 1 zusammenwirkt.

Die außermittig angeordnete Spitze 20 des Stützstiftes 9 kann bei entsprechenden Mikrostrukturen oder Sekundärstrukturen der Kanäle 3 der Wabenkörper 1 und 10 oder weiterer Trägerkörper eine Verletzung dieser Strukturen und insbesondere ein Abgleiten des Stützstiftes 9 aus dem Kanal 3 in einen benachbarten Kanal 3 infolge von Leitschaufeln oder ähnlichen Sekundärstrukturen vermeiden. Die Spitze 20 wird sich in diesem Fall an der glatten Kanalwand 17 anschmiegen und infolge der abgeschrägten Spitze 20 vorhandene Sekundär- oder Mikrostrukturen verdrängen ohne von diesen aus der antizipierten Bahn herausgedrückt zu werden. Dafür müssen gegebenenfalls die Stützstifte 9 entsprechend der Anordnung der Spitze 20 und abhängig von ihrer Position in den Wabenkörpern 1, 10 besonders ausgerichtet sein. Gleichfalls kann es erforderlich sein, die Sekundär- oder Mikrostrukturen in den Kanälen 3 entsprechend ihrer Position im Wabenkörper 1, 10 derart auszurichten, dass die Spitze 20 der Stützstifte 9 nicht in diese eingreift, sondern diese nur verdrängt.

Fig. 5 zeigt schematisch in einer Seitenansicht die Anordnung 28 des ersten Wabenkörpers 1 mit einem zweiten Wabenkörper 10 in einem gemeinsamen Gehäuse 31. Dabei ist der Wabenkörper 1 mit einem Durchmesser 15 über Stützstifte 9, die nur bis zu einer Tiefe 18 in Kanälen 3 des zweiten Wabenkörpers 10 bzw. des weiteren Trägerkörpers angeordnet sind, in diesem zweiten Wabenkörper 10 bzw. dem weiteren Trägerkörper abgestützt. Der Abgasstrom tritt über die Stirnfläche 39 in den Wabenkörper 1 ein, wird durch diesen erhitzt und strömt dann durch den stromabwärts entlang der Längsachse 38 angeordneten zweiten Wabenkörper 10.

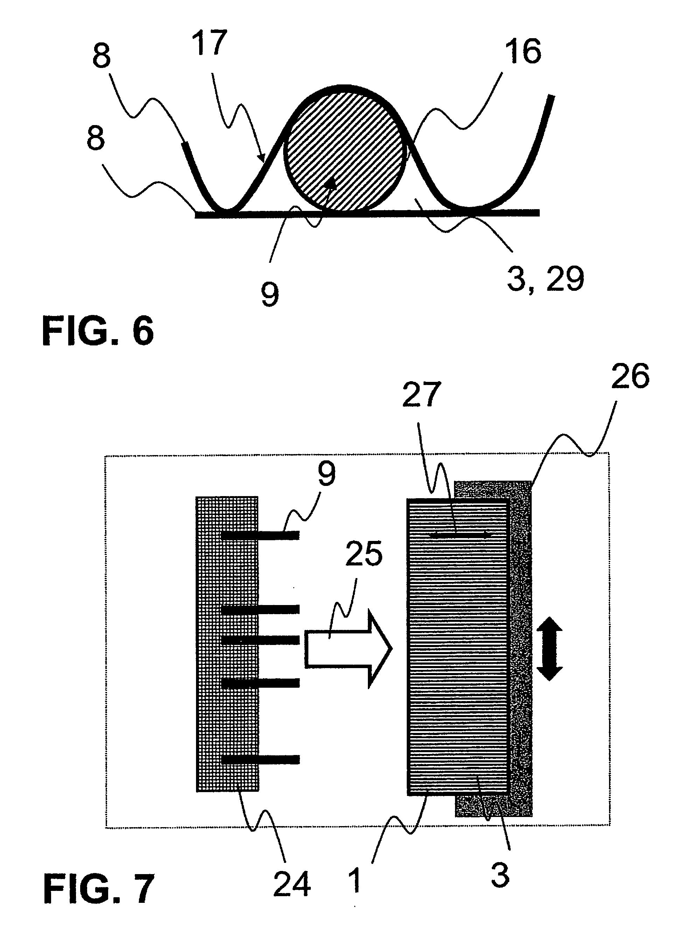

Fig. 6 zeigt einen Stützstift 9 innerhalb eines Kanals 3 der durch Blechfolien 8 gebildet sein kann aber auch durch Blechfolien 8 mit dem Gehäuse 31 des Wabenkörpers 1, bzw. einen Stützstift 9 innerhalb eines Schlitz 29, der mit anderen, auch isolierenden, Strukturen des Wabenkörpers 1 gebildet ist. Dabei wird der Stützstift 9 durch die Wände 17 auf seinem Umfang 16 kontaktiert und kann einerseits durch einen Reibkontakt fixiert werden andererseits auch durch eine Klemmung, die hervorgerufen wird durch eine Aufweitung des Kanals 3 bzw. des Schlitz 29 infolge des Einschiebens des Stützstiftes 9. Dementsprechend kann der Stützstift 9 auch größere Durchmesser aufweisen als der entsprechende Durchmesser eines Kanals 3 bzw. die Ausdehnung des Schlitz 29. Der Stützstift 9 kann im Zuge der Herstellung des Wabenkörpers 1 bzw. während der Herstellung der Abgasreinigungsanordnung, bestehend aus Wabenkörper 1 und zweitem Wabenkörper 10 durch Lot fixiert werden.

Fig. 7 zeigt schematisch das Verfahren zur Montage von Wabenkörpern 1, 10 und Stützstiften 9, wobei die Stützstifte 9 in einer Haltevorrichtung 24 aufgenommen sind und entlang einer Zuführbewegung 25 auf den Wabenkörper 1 zu bewegt werden. Wabenkörper 1 ist dabei über eine Vorrichtung 26 fixiert. Gemäß Fig. 6 wird die Haltevorrichtung 24 quer zur Zuführbewegung 25 so angeregt, dass die Stützstifte 9 in die Kanäle 3 des Wabenkörpers 1 eingeführt werden ohne die Strukturen bzw. Blechfolien 8 des Wabenkörpers 1 zu beschädigen. Der Prozess des Zuführens der genannten Komponenten 24, 1, 10 kann über weitere Sensoren überwacht und gesteuert werden. Außerdem ist natürlich auch möglich, dass (alternativ oder kumulativ) die Haltevorrichtung 24 eine Querbewegung (Oszillation) ausführt.

### Bezugszeichenliste

- 1: erster Wabenkörper
- 2: Stapel
- 3: Kanal
- 4: erstes Ende
- 5: elektrischer Anschluss
- 6: zweites Ende
- 7: elektrische Masse
- 8: Blechfolie
- 9: Stützstift
- 10: zweiter Wabenkörper
- 11: innerer Bereich
- 12: Querschnittsfläche
- 13: Abstand
- 14: Distanz
- 15: Durchmesser
- 16: Umfang
- 17: Wand
- 18: Tiefe
- 19: Abgasreinigungskomponente
- 20: Spitze
- 21: Mittelachse
- 22: Mantelfläche
- 23: Höhe
- 24: Haltevorrichtung
- 25: Zuführbewegung
- 26: Vorrichtung
- 27: Erstreckungsrichtung
- 28: Anordnung
- 29: Schlitz
- 30: Spalt
- 31: Gehäuse
- 32: Kraftfahrzeug
- 33: Kontrolleinheit
- 34: Verbrennungskraftmaschine
- 35: Sensor
- 36: Abgassystem
- 37: Strömungsrichtung
- 38: Längsachse
- 39: Stirnfläche
- 40: Isolierung

## Patentansprüche

1. Anordnung (28), aufweisend einen ersten Wabenkörper (1), der mit wenigstens einem gewundenen oder gewickelten Stapel (2) gebildet ist und eine Vielzahl von durchströmbaren Kanälen (3) aufweist, wobei ein erstes Ende (4) des Stapels (2) mit einem elektrischen Anschluss (5) und ein zweites Ende (6) mit einer elektrischen Masse (7) verbunden ist, und der Stapel (2) eine Mehrzahl von miteinander in elektrischem Kontakt stehenden, wenigstens teilweise strukturierten, Blechfolien (8) aufweist, und der Wabenkörper (1) Stützstifte (9) zur Verbindung mit einem zweiten Wabenkörper (10) aufweist, **dadurch gekennzeichnet, dass** die Stützstifte (9) wenigstens außerhalb eines inneren Bereiches (11) einen Abstand (13) voneinander entlang des Verlaufs des Stapels (2) von wenigstens 25 mm aufweisen.

2. Anordnung (28) nach Anspruch 1, wobei wenigstens die Stützstifte (9) außerhalb eines inneren Bereiches (11) über die Querschnittsfläche (12) des Wabenkörpers (1) so verteilt sind, dass diese eine Distanz (14) von wenigstens 25 mm zueinander aufweisen.

3. Anordnung (28) nach Patentanspruch 1 oder 2, wobei ein Durchmesser (15) des ersten Wabenkörpers (1) wenigstens 100 mm beträgt.

4. Anordnung (28) nach einem der Ansprüche 1 bis 3, wobei wenigstens ein Stützstift (9) so dimensioniert ist, dass dieser den Kanal (3), in dem dieser positioniert ist, so ausfüllt, dass der Stützstift (9) über wenigstens 50 % eines, in dem Wabenkörper (1) befindlichen, Umfangs (16) in Kontakt mit den umgebenden Wänden (17) steht, die den Kanal (3) bilden.

5. Anordnung (28) nach einem der Ansprüche 1 bis 4, wobei die Stützstifte (9) bis zu einer Tiefe (18) von höchstens 8 mm in den zweiten Wabenkörper (10) eingreifen.

6. Anordnung (28) nach einem der Ansprüche 1 bis 5, wobei wenigstens ein Stützstift (9) wenigstens eine Spitze (20) aufweist, die außermittig zu einer Mittelachse (21) des Stützstiftes (9) angeordnet ist.

7. Anordnung (28) einem der Ansprüche 1 bis 6, wobei der wenigstens eine Stapel (2) des ersten Wabenkörpers (1) eine Höhe (23) von wenigstens 10 mm aufweist.

8. Anordnung nach einem der vorhergehenden Ansprüche, wobei der innere Bereich (11) höchstens 20 % einer Querschnittsfläche (12) des ersten Wabenkörpers (1) umfasst.

9. Verfahren zum Einbringen von Stützstiften (9) in Kanäle (3) oder Schlitze (29) eines ersten Wabenkörpers (1) einer Anordung gemäß Anspruch 1 bis 8 wobei
- Stützstifte (9) durch eine Haltevorrichtung (24) positioniert werden und,
- mittels Anregung quer zur Zuführbewegung (25) des ersten Wabenkörpers (1) und der Haltevorrichtung (24) zueinander, die Stützstifte (9) zum Eingreifen in die Kanäle (3) oder Schlitze (29) gebracht werden.

10. Verfahren nach Anspruch 9, wobei die Stützstifte (9) danach gemeinsam mit dem ersten Wabenkörper (1) an einem zweiten Wabenkörper (10) angeordnet werden, so dass ein Spalt (30) die beiden Wabenkörper beabstandet, und die Stützstifte (9) durch einen Lötprozess an den Wabenkörpern fixiert werden.

## Claims

1. An arrangement (28), having a first honeycomb body (1) which is formed with at least one wound or coiled stack (2) and which has a plurality of ducts (3) which can be traversed by flow, with a first end (4) of the stack (2) being connected to an electrical terminal (5) and a second end (6) being connected to an electrical ground (7), and with the stack (2) having a multiplicity of at least partially structured sheet-metal foils (8) which are in electrical contact with one another, and with the honeycomb body (1) having support pins (9) for connecting to a second honeycomb body (10), **characterized in that** the support pins (9), at least outside an inner region (11), have a spacing (13) from one another along the profile of the stack (2) of at least 25 mm.

2. The arrangement (28) as claimed in claim 1, with at least the support pins (9) outside an inner region (11) being distributed over the cross-sectional area (12) of the honeycomb body (1) in such a way as to be at a distance (14) of at least 25 mm from one another.

3. The arrangement (28) as claimed in claim 1 or 2, with a diameter (15) of the first honeycomb body (1) being at least 100 mm.

4. The arrangement (28) as claimed in one of claims 1 to 3, with at least one support pin (9) being dimensioned so as to fill the duct (3) in which it is positioned in such a way that the support pin (9) is in contact with the surrounding walls (17), which form the duct (3), over at least 50% of a circumference (16) situated in the honeycomb body (1).

5. The arrangement (28) as claimed in one of claims 1 to 4, with the support pins (9) engaging into the second honeycomb body (10) up to a depth (18) of at most 8 mm.

6. The arrangement (28) as claimed in one of claims 1 to 5, with at least one support pin (9) having at least one tip (20) which is arranged eccentrically with respect to a central axis (21) of the support pin (9).

7. The arrangement (28) as claimed in one of claims 1 to 6, with the at least one stack (2) of the first honeycomb body (1) having a height (23) of at least 10 mm.

8. The arrangement as claimed in one of the preceding claims, with the inner region (11) encompassing at most 20% of a cross-sectional area (12) of the first honeycomb body (1).

9. A method for inserting support pins (9) into ducts (3) or slots (29) of a first honeycomb body (1) of an arrangement as claimed in claims 1 to 8, in which method
- support pins (9) are positioned by means of a retaining device (24), and
- the support pins (9) are placed into engagement in the ducts (3) or slots (29) by means of excitation transversely with respect to the feed movement (25) of the first honeycomb body (1) and of the retaining device (24) relative to one another.

10. The method as claimed in claim 9, with the support pins (9) subsequently being arranged, together with the first honeycomb body (1), on a second honeycomb body (10) such that a gap (30) separates the two honeycomb bodies, and the support pins (9) are fixed to the honeycomb bodies by means of a soldering process.

## Revendications

1. Ensemble (28), comportant un premier corps en nids d'abeilles (1) qui est formé avec au moins une pile (2) sinueuse ou enroulée et qui a une multiplicité de canaux pouvant être traversés (3), une première extrémité (4) de la pile (2) étant connectée avec un raccord électrique (5) et une deuxième extrémité (6) avec une masse électrique (7) et la pile (2) ayant une pluralité de feuilles de tôle (8) au moins partiellement structurées étant en contact électrique les unes avec les autres, et le corps en nids d'abeilles (1) ayant des tiges de soutien (9) pour la liaison avec un deuxième corps en nids d'abeilles (10), **caractérisé en ce que** les tiges de soutien (9) ont au moins à l'extérieur d'une région intérieure (11) un écart (13) les unes des autres le long de l'allure de la pile (2) d'au moins 25 mm.

2. Ensemble (28) selon la revendication 1, au moins les tiges de soutien (9) étant réparties de telle façon à l'extérieur d'une région intérieure (11) par dessus l'aire en section transversale (12) du corps en nids d'abeilles (1) que celles-ci ont une distance (14) d'au moins 25 mm les unes des autres.

3. Ensemble (28) selon la revendication 1 ou 2, un diamètre (15) du premier corps en nids d'abeilles (1) comportant au moins 100 mm.

4. Ensemble (28) selon l'une des revendications 1 à 3, au moins une tige de soutien (9) étant dimensionnée de telle façon, que celle-ci remplit le canal (3), dans lequel celle-ci est positionnée de telle manière que sur au moins 50 % d'une circonférence (16) se trouvant dans le corps en nids d'abeilles la tige de soutien (9) est en contact avec les parois entourant (17) qui forment le canal (3).

5. Ensemble (28) selon l'une des revendications 1 à 4, les tiges de soutien (9) intervenant jusqu'à une profondeur (18) d'au maximum 8 mm dans le deuxième corps en nids d'abeilles (10).

6. Ensemble (28) selon l'une des revendications 1 à 5, au moins une tige de soutien (9) ayant au moins une pointe (20), qui est agencée de manière excentrée par rapport à un axe médian (21) de la tige de soutien (9).

7. Ensemble (28) selon l'une des revendications 1 à 6, l'au moins une pile (2) du premier corps en nids d'abeilles (1) ayant une hauteur (23) d'au moins 10 mm.

8. Ensemble selon l'une des revendications précédentes, la région intérieure (11) ne comprenant au maximum que 20 % d'une aire en section transversale (12) du premier corps en nids d'abeilles (1).

9. Dispositif pour introduire des tiges de soutien (9) dans des canaux (3) ou des fentes (29) d'un premier corps en nids d'abeilles (1), conformément à un ensemble selon les revendications 1 à 8,
- des tiges de soutien (9) étant positionnées par un dispositif de retenue (24) et
- les tiges de soutien (9) étant positionnées par un dispositif d'arrêt (24)
- au moyen d'instigation transversalement au mouvement d'alimentation (25) du premier corps en nids d'abeilles (1) et du dispositif de retenue (24), pour s'engager dans les canaux (3) ou dans les fentes (29) les tiges de soutien (9) étant portées.

10. Procédé selon la revendication 9, les tiges de soutien (9) étant ensuite agencées communément avec le premier corps en nids d'abeilles (1) sur un deuxième corps en nids d'abeilles (10), de sorte qu'une fente (30) rend distant les deux corps en nids d'abeilles et les tiges de soutien (9) étant fixées sur les corps en nids d'abeilles par un processus de brasage.
